# EUROPEAN PATENT SPECIFICATION

(11) **EP 2 637 976 B1**
(45) Date of publication and mention of the grant of the patent: **17.06.2015**
(21) Application number: 10774232.2
(22) Date of filing: 10.11.2010
(51) Int. Cl.: C02F 3/28, C02F 1/50, C02F 101/10

(54) **METHOD TO SUPPORT AN EMISSION-FREE AND DEPOSIT-FREE TRANSPORT OF SULPHIDE IN SEWER SYSTEMS TO WASTE WATER TREATMENT PLANTS**
VERFAHREN ZUR UNTERSTÜTZUNG EINES EMISSIONSFREIEN UND ABLAGERUNGSFREIEN TRANSPORTS VON SCHWEFELWASSERSTOFF IN ABWASSERSYSTEMEN ZU KLÄRANLAGEN
MÉTHODE DE PRISE EN CHARGE D'UN TRANSPORT SANS ÉMISSION ET SANS DÉPÔT DE SULFURE DANS LES RÉSEAUX D'ÉGOUTS JUSQU'AUX STATIONS DE TRAITEMENT DES EAUX USÉES

(43) Date of publication of application: 18.09.2013
(73) Proprietor: Yara International ASA, 0202 Oslo (NO)
(72) Inventor: FRANKE, Wolfram, N-3912 Porsgrunn (NO)
(74) Representative: Onsagers AS
(86) International application number: PCT/EP2010/067189
(87) International publication number: WO 2012/062359

(56) References cited:
- EP-A1- 1 070 507
- AU-B2- 623 787
- CN-A- 101 372 385
- GB-A- 1 083 343
- US-A- 4 110 208
- US-A- 4 891 415
- US-A- 5 141 647
- US-A- 5 948 269
- US-A1- 2004 010 955
- US-A1- 2007 205 159

## Description

### Field of invention

The present invention concerns a method to support an emission-free and deposit-free transport of sulphide in sewer systems to waste water treatment plants.

### Background of invention

Waste water tends to get septic in pressure mains if not treated with an oxygen source. Once the waste water has turned septic anaerobic degradation processes will start generally resulting in the formation of hydrogen sulphide (H₂S).

A common method to bind H₂S is the addition of iron salts to the septic waste water whereby iron sulphide (FeS) is formed. Iron sulphide is a water insoluble solid, and its formation causes problems due to precipitation as well as by influencing the quality of separated sand and sludge in the waste water treatment plant. Other methods, like the addition of nitrate salts, lead to production of nitrogen gas, which may cause operational problems especially in pressure mains without degassing valves.

Waste water conditioning is a common technology to prevent emissions. Several different approaches are available and beneficial for most cases. When it comes to conditioning of waste water in pressure mains lying on the bottom of lakes a special problem limits so far the application of chemicals: The sewer is placed on the bottom of the lake so uneven, that it cannot be cleaned easily and gas will be captured in the pipe - what leads to a drastic lower flow rate and even swimming up of big sewers.

The first problem prohibits the use of common iron salts and the second problem the use of nitrate salts. However a treatment of such waste water is needed as corrosion, health risks and odour emissions are caused by H₂S.

There are several processes known to separate and/or eliminate H₂S from liquid phases, e.g. addition of ferric and/or ferrous iron chloride solution. US 5,948,269 disclose the addition of alkaline iron in liquid and sludge waste systems to control concentration of hydrogen sulphide and other malodorous compounds. The process removes sulphide and suppresses the formation of further nuisance sulphide with a single application. Exemplified alkaline iron compounds are ferrous hydroxide, ferrous carbonate, ferrous bicarbonate, hydrated ferrous oxide, ferric hydroxide, ferric carbonate, ferric bicarbonate, ferric hydroxide oxide, hydrated ferric oxide, and mixtures thereof.

In US 4,902,408 a process for removing hydrogen sulphide using a mixture of hydrocarbons of iron 2-ethylhexanoate, is disclosed.

There are also some processes known to dissolute or disperse iron sulphides, for example:
GB 2 257 428 is concerned with a chemical formulation for control of odour emission from sewage etc. There is disclosed a chemical formulation comprising one or more mono-terpene oils dissolved in alcohol mixed with at least 1-chloroanthroquinone and 2-chloroanthroquinone. An iron compound such as ferrous carbonate, ferrous chloride or ferric chloride may also be included. The formulation may be added to sludge to be processed in an anaerobic digester to reduce hydrogen sulphide production.

US 1,873,083 concerns a method for treatment of oil well liquids involving the addition of a mixture of alkali metal salts and caustic alkali solution of tannin. Insoluble alkaline earth salt are precipitated from the well liquids in a pulverulent and non-scale building form.

US 4,381,950 disclose a process for reducing hydrogen sulphide gas evolution during dissolution of ferrous sulphide with an aqueous acidic solution containing an effective amount of an additive comprising at least one member selected from the group consisting of maleic acid, maleic anhydride and the alkali metal and ammonium salts of maleic acid.

US 4,276,185 is concerned with methods and compositions for removing deposits containing iron sulphide from surfaces with minimal hydrogen sulphide evolution. A composition comprised of a basic aqueous solution of a chelating agent elected from the group consisting of citric acid, oxalic acid, nitrilotriacetic acid, alkylene polyamine polyacetic acids and mixtures of such chelating agents having a pH in the range of from about 8 to about 10 is brought into contact with the deposits for a period of time sufficient for the deposits to be dissolved therein.

US 6,926,836 is concerned with treatment of a water system containing or in contact with a metal sulphide scale to inhibit, prevent, reduce, dissolve or disperse iron sulphide deposits. A solution of tris(hydroxyorgano)phosphines (THP) and tetrakis (hydroxy-organo) phosphonium salts (THP⁺ salts) and (ii) sufficient of a chelant (amino-carboxylates or amino-phosphonate) to provide a solution containing from 0.1 to 50% by weight of said THP or THP⁺ salt and from 0.1 to 50 % by weight of said chelant, is contacted with the metal sulphide scale thereby to dissolve at least part of said scale in said solution

US 2007/0108127 relates to a method of treating an aqueous system containing or in contact with metal sulphide scale. The method comprises adding to said system, separately or together, sufficient of a synergistic mixture comprising a THP⁺ salt, an aqueous solution of a strong acid (and optionally a source of nitrogen) to provide a solution containing from 0.1% to 30% by weight of the THP⁺ salt at a pH of less than about 1.0. The scale is contacted with said solution, (thereby dissolving at least part of said scale in said solution) and the dissolved scale is withdrawn from the system.

Lignosulphonates (LS) are used in cement and concrete applications, where the molecules cover the cement particles and retard the hydration process. The process bases on formation of a cement particle paste, in a way that the hydration process starts only slowly. There are also other technical processes where lignosulphonates may be used to produce suspensions

JP 6305200 disclose a method wherein the generation of hydrogen sulphide is inhibited by adding iron salt (ferrous sulphate or ferric chloride) to sludge and allowing the iron salt to react with the sulphur content in a storage tank. In the reaction iron sulphide and sulphuric acid or hydrochloric acid is produced and thereby the generation of hydrogen sulphide is inhibited. The so reacted sludge from the storage tank is mixed with a high polymer flocculation agent and the dehydrating efficiency is enhanced.

Organic polyelectrolytes have been applied in water treatment in sludge thickening and coagulation/flocculation processes. According to Bolto, Brian A. et al (War. Sci. Tech. vol. 34, No9. pp 117-124, 1996) can organic polymeric flocculants be used as primary coagulants, instead of inorganic salt, in the treatment of many industrial wastes that are further processes by flotation. It is stated that the charge density of the cationic polymer used must be carefully selected.

From prior art e.g. as cited above it is known to use polymers to support and facilitate flocculation and coagulation in separation processes, whereas in the present invention the polymer is added to facilitate dispersion.

Chack, J.J. et al ((1994) "Advanced primary treatment bridges the gap". Water Env. & Technol., 6, 49-53) disclose that test results showed that the addition of a limited amount of ferric chloride in the combination with an anionic polymer improved primary biochemical oxygen demand (BOD) and suspended solids (SS) removals without disrupting solids processing. The optimal dosage of ferric chloride was 50 ppm for 6 hours/day during daily maximum flows and 15 ppm for the remainder of the day in combination with an anionic polymer dosage of 1 ppm.

In EP 1 070 507 A1, the use of a composition comprising a metal component and an aldehyde, the treatment agent lacking a surfactant, the metal component comprising a source of zinc, silver, zirconium, magnesium, manganese, aluminium, copper combined with aluminium, or copper combined with iron, and the aldehyde being selected from the group consisting of benxaldehyde, glyoxal, acetaldehyde, glutaraldehyde, citral, anis-aldehyde, decanal and mixtures thereof, as a biowaste treatment agent are disclosed.

The prior art discloses methods from removing metals from water. For example, the US patent application No. 2004/0010955 A1 relates to a method for removing metal contaminants from water using lignin derivatives, such as lignosulfonates and kraft lignin, in addition to a coagulant, such as a metal salt, and a pH increasing composition. The US patent application No. 2007/205159 A1 disclose yet another method, comprising metals from metal containing acidic mine waste water, wherein a basic sludge produced by said method is used in treating said waste water, the method comprising the mixing of the waste water and a lime slurry and said basic sludge, followed by separation of said mixture into an aqueous effluent and an acidic sludge, further followed by mixing said effluent with a lime slurry and with a composition comprising an iron compound, to produce a mixture and finally separation of the mixture of the latter step into an aqueous effluent and said basic sludge.

### Brief description of the drawings

Figure 1 shows the reduction of mixed liquor suspended solids (MLSS) with the amount of sodium lignosulphonate.
Figure 2 shows that the reduction of mixed liquor suspended solids (MLSS) has linear dependency to the ratio of sodium lignosulphonate to FeCl₂.
Figure 3 shows the reduction of mixed liquor suspended solids (MLSS) to the ratio of sodium lignosulphonate to FeCl₂ over time. Most of the reduction takes place in the beginning; hence the reaction time is short.

### Summary of invention

The present invention provides a method for conditioning of septic waste water comprising the step of adding said agent to the septic waste water in need of treatment. In particular, the present invention provides a method for the conditioning of septic waste water to prevent the formation of hydrogen sulphide and prevent subsequent precipitation of FeS, comprising the step of adding simultaneously to the septic waste water an aqueous solution of iron salts, selected from the group consisting of FeCl₂, FeCl₃, FeClSO₄, FeSO₄ and mixtures thereof, which react with an anionic polymer, selected from the group consisting of calcium lignosulphonate and sodium lignosulphonate, which interacts with the formed FeS to a colloidal sol, stable to precipitation.

The iron salt reacts with sulphur containing compounds to form FeS and thus prevents the formation of hydrogen sulphide, while the anionic polymer interact with the formed FeS to a colloid sol stable to precipitation.

### Detailed description of the invention

The chemical reaction between iron and sulphide is well known. The stoichiometric dosage is approximately 3.9 mg FeCl₂ per 1 mg S²⁻. However, in general an overdose of 50% is necessary. An overdose of iron salt compared to the stoichiometric proportion has to be used since other constituents of waste-water may also react with iron ions. Using basically a 20% FeCl₂ solution and considering a sulphide load of 1 mg/L this demands a dosage of 29 mg/L what equals approximately 21 ml/L.

The method of the invention uses besides iron salts, selected from the group consisting of FeCl₂, FeCl₃, FeClSO₄, FeSO₄ and mixtures thereof, the simultaneous addition of an anionic polymer, selected from the group consisting of calcium lignosulphonate and sodium lignosulphonat e. The use of hydrophilic polymers as so-called protective colloids is described in the literature for protecting hydrophobic colloids against coagulation at high concentration of electrolytes by forming a hydrophilic sheath around the hydrophobic particles.

Following the invention sulphide from soluble sulphide compounds, especially H₂S, reacts to FeS. With the simultaneously added anionic polymer selected from the group consisting of calcium lignosulphonate and sodium lignosulphonat, a nanostructured complex is formed, leading to a colloid sol stable against precipitation.

After being transported into the waste water treatment plants the complexes of FeS and anionic polymer e.g. lignosulphonate can be easily degraded under the influence of oxygen.

For achieving an emission-free and deposit-free transport of sulphide in sewer systems a blend of iron salt and an anionic polymer selected from the group consisting of calcium lignosulphonate and sodium lignosulphonat, is, according to the present invention, added to the waste water.

The reaction product is a solid FeS-LS complex of very small size, forming a colloid sol which prevents the precipitation of FeS. FeS does not deposit in sewers at common flow rates and turbulences and neither at times without movement.

Additional advantageous effects according to the invention are
i) that the small size of the particles supports an easier oxidation compared to larger particles occurring without the treatment according to the invention. This results in a faster oxidation of the iron sulphide and the polymer in the aerated sand trap or the aerated biological treatment plant.
ii) lignosulphonate has an inhibitory effect on growth of some microorganisms, e.g. fungi and bacteria. This effect further reduces the production of H₂S.

The method may preferably be used in pressure mains through lakes, underground and the like because here a precipitation-free as well as off-gas-free preconditioning method is particularly beneficial.

Several iron salts may be used in the agent and the iron salts selected from the group consisting of FeCl₂, FeCl₃, FeClSO₄, FeSO₄ and mixtures thereof are suitable particularly FeCl₂, FeCl₃, and mixture thereof.

Several anionic polymers are known in the art and may be used in the agent according to the invention. Iron lignosulphonate, sodium lignosulphonate and calcium lignosulphonate are however preferred.

In one embodiment of the invention an aqueous mixture of both an iron salt and an anionic polymer in the mass proportion of iron salt to anionic polymer, particularly lignosulphonate in the range of 1:0.5 to 1:1.5 calculated as substances free from water is provided.

The iron salts may be provided in an aqueous solution with a concentration of 20 % to 40 % by weight, and the anionic polymer e.g. lignosulphonate, may be provided as an aqueous solution with a concentration of 10 % to 30 % by weight.

In another aspect of the invention a method for the conditioning of septic waste water to prevent the formation of hydrogen sulphide and prevent subsequent precipitation of FeS is provided, wherein the step of adding simultaneously an aqueous solution of iron salts, selected from the group consisting of FeCl₂, FeCl₃, FeClSO₄, FeSO₄ and mixtures thereof, together with an anionic polymer, selected from the group consisting of calcium lignosulphonate and sodium lignosulphonate, to the septic waste water is comprised.

The dosage of the iron salt polymer solution equals the common dosage for an iron salt solution alone. Hence the dosing strategy or demand itself is not affected. For example a sulphide concentration of 1 mg/L demands a dosage of 21 mL/L.

In one embodiment of the method according to the invention an aqueous mixture of both iron salts and anionic polymer in mass proportion of iron salt to anionic polymer, particularly lignosulphonate, in the range of 1:0.5 to 1:1.5 calculated as substances free from water is provided.

In a further embodiment of the method according to the invention the iron salt solution and the anionic polymer solution are added as a mixture of both solutions.

In yet another embodiment of the method according to the invention the iron salt solution and anionic polymer solution are added simultaneously as separately solutions.

Certain embodiments of the invention are illustrated by the non-limiting examples below.

### Examples

### Case study 1 - The general effect

In a lab scale test batch reactors were used. Samples of conditioning fluids with FeCl₂ as iron source were produced. In one reactor additionally LS was dosed. H₂S was bubbled into the reactors containing dilutions of these conditioning fluids. After a certain time of experiment Fe²⁺ was consumed and the maximum of FeS formed. In the non-LS-treated reactors insoluble solids were produced. In the LS treated samples FeS was also formed (dark grey colour) but particles were invisible small - the liquid stayed clear.

### Case study 2 - Dose response test:

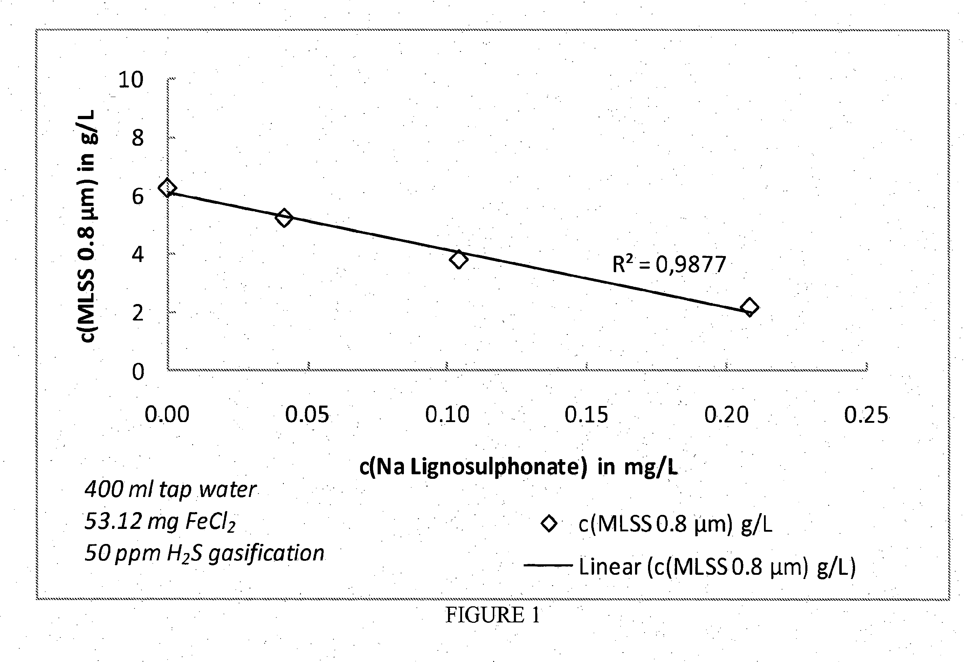

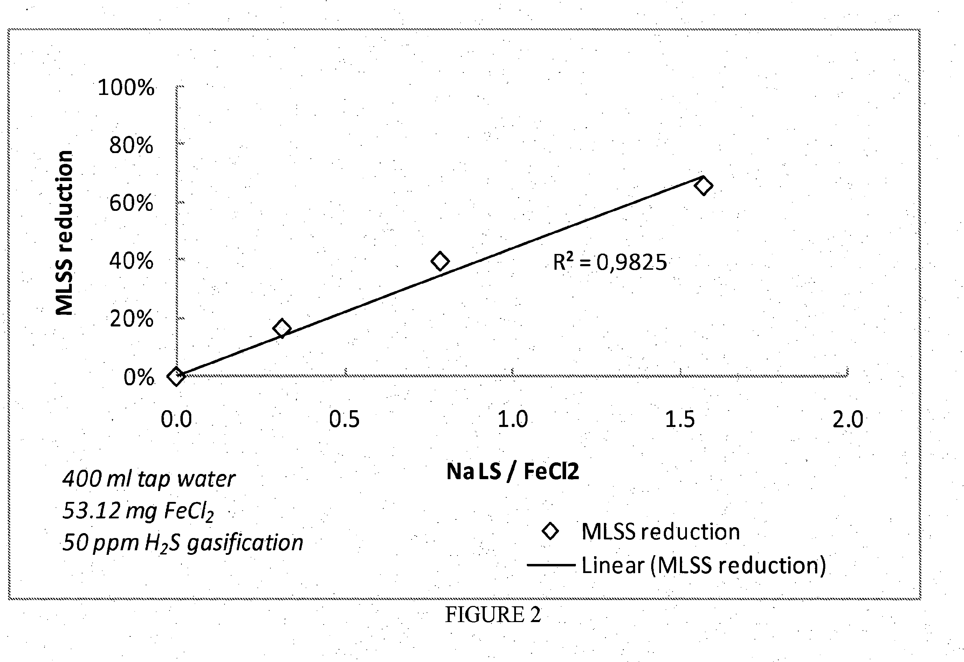

In a lab scale test batch reactors were used. 400 ml tap water was mixed with 0.5 ml of a 11% FeCl₂ solution. Different dosages of sodium lignosulphonate LS solution (20%) were added (0.0 ml, 0.1 ml, 0.25 ml and 0.5 ml). The samples were aerated with 50 ppm H₂S in nitrogen gas. Whereas the non-LS containing sample turned turbid, the LS treated samples stayed clear independently from LS dosage. The content of mixed liquor_suspended solids (MLSS) was measured using 0.8 µm filters. The result indicates strongly a linear dose response relationship between LS and suspended solids as the reduction of MLSS has a linear dependency to the ration of Na LS to FeCl₂. The results are shown in figures 1 and 2.

### Case study 3 - Time related effects:

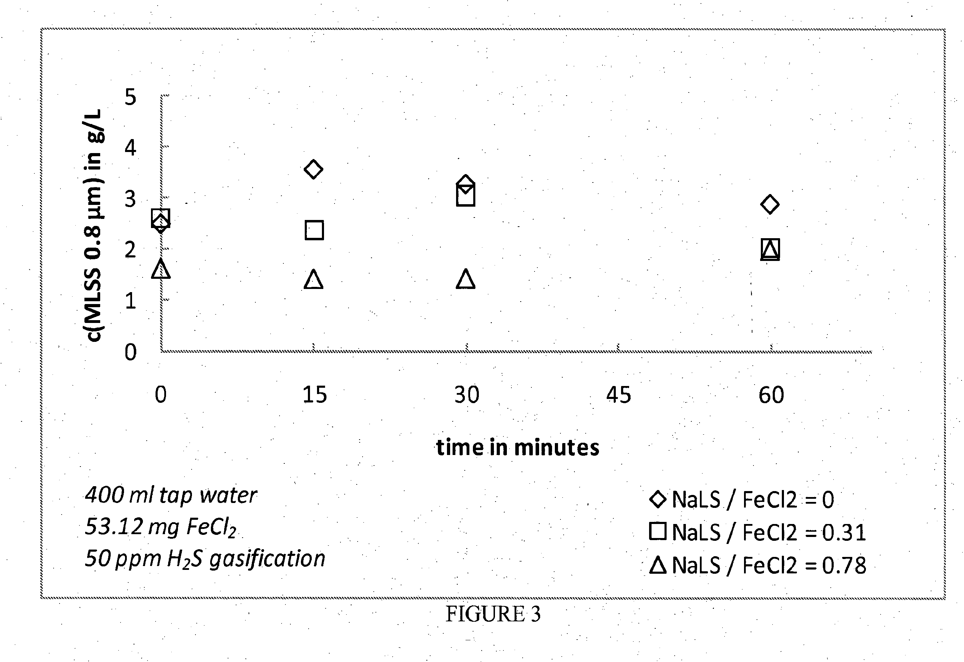

In a lab scale test batch reactors were used. 400 ml tap water was mixed with 0.5 ml of a 11% FeCl₂ solution. Different dosages of sodium lignosulphonate solution (20%) were added (0.0 ml, 0.1 ml and 0.25 ml). The samples were aerated with 50 ppm H₂S in nitrogen gas. The content of mixed liquor suspended solids (MLSS) was measured using 0.8 µm filters. The effect of keeping solids in solution seems to be time independent within at least one hour. The samples were aerated for additionally one hour. At that stage the LS treated samples had -following the LS addition- a more or less dark brown colour. Samples were stored for 48 h without H₂S addition but air access via sample surface. After that period of time samples were visually checked: The non-LS treated sample was clear and solids had settled down. All the LS treated samples were clear without any precipitation and the colour in the LS treated samples had changed from brownish to green. The results are represented in figure 3.

### Case study 4 - compatibility

In a laboratory scale test it was found that both Ca-LS and Na-LS can be used with FeCl₂ and FeCl₃. Na-LS can additionally be used with FeClSO₄ and FeSO₄. Mixtures of Ca-LS and FeClSO₄ or FeSO₄ showed a reduced performance.

### Case study 5 - handling test

In laboratory and large scale tests different blended products were investigated on their practical handling. Especially the viscosity and possibility to dose the product with ordinary membrane pumps was tested. The investigation revealed that the iron salt concentration is preferably limited to 20% in the aqueous solution. This is mainly caused by the viscosity increase due to lignosulphonate and keeping the necessary ratio between iron salt and lignosulphonate.

### Case study 6 - Large scale test

A pressure main with a length of 5.2 km passes a lake of 1.5 km diameter. At the pumping pit at the beginning of the pressure main already septic waste water exists with a strong smell of hydrogen sulphide. An aqueous solution with 35 % dissolved solids, containing 17.5 % of FeCl₂ and 17.6 % of sodium lignosulphonate was dosed in a ratio of 400 ml/m³ waste water into the pit.

At the outlet of the pressure pipe no smell of hydrogen sulphide could be observed. Additionally a long term monitoring of the gas phase indicated no significant H₂S emission. A sample of the waste water was given into a glass cylinder. There occurred no precipitation of FeS even after a period of 6 hours.

The waste water could be easily handled in the waste water treatment plant. There was no additional foam and the Fe/lignosulphonate complex was already oxidized in the sand trap and the primary settlement tank.

## Claims

1. A method for the conditioning of septic waste water to prevent the formation of hydrogen sulphide and prevent subsequent precipitation of FeS,
**characterized in that** the method comprises the step of adding simultaneously to the septic waste water an aqueous solution of iron salts, selected from the group consisting of FeCl₂, FeCl₃, FeClSO₄, FeSO₄ and mixtures thereof, which react with an anionic polymer, selected from the group consisting of calcium lignosulphonate and sodium lignosulphonate, which interacts with the formed FeS to a colloidal sol, stable to precipitation.

2. The method according to claim 1,
**characterized in that** an aqueous mixture of both iron salts and lignosulphonate in the mass proportion of iron salt to anionic polymer in the range of 1:0.5 to 1:1.5 calculated as substances free from water is added to the septic waste water.

3. The method according to claim 2,
**characterized in that** the mixture is prepared from aqueous solutions of iron salts with a concentration of 20 % to 40 % and from aqueous solutions of anionic polymer with a concentration of 10 % to 30 %.

4. The method according to any one of the preceding claims 1 to 3,
**characterized in that** iron salt solution and anionic polymer solution can be added as a mixture of both solutions.

5. The method according to any one of the preceding claims 1 to 4
**characterized in that** iron salt solution and anionic polymer solution can be added simultaneously as separately solutions.

6. The method according to any one of the preceding claims 1 to 5,
**characterized in that** the iron salts are selected from the group consisting of FeCl₂ and FeCl₃, and the anionic polymer is selected from the group consisting of calcium lignosulphonate and sodium lignosulphonate.

7. The method according to any one of the preceding claims 1 to 5,
**characterized in that** the iron salts are selected from the group consisting of FeClSO₄ and FeSO₄, and the anionic polymer is selected from the group consisting of sodium lignosulphonate.

## Patentansprüche

1. Verfahren zur Konditionierung von septischem Abwasser zur Verhinderung der Bildung von Schwefelwasserstoff und zur Verhinderung der anschließenden Ausfällung von FeS, **dadurch gekennzeichnet, dass** das Verfahren den Schritt der gleichzeitigen Zugabe einer wässrigen Lösung von Eisensalzen ausgewählt aus der Gruppe bestehend aus FeCl₂, FeCl₃, FeClSO₄, FeSO₄ und Mischungen davon, die mit einem anionischen Polymer ausgewählt aus der Gruppe bestehend aus Calciumlignosulfonat und Natriumlignosulfonat, das mit dem gebildeten FeS unter Bildung eines gegenüber Ausfällung stabilen kolloidalen Sols wechselwirkt, reagiert, zu dem septischen Abwasser umfasst.

2. Verfahren nach Anspruch 1, **dadurch gekennzeichnet, dass** eine wässrige Mischung von sowohl Eisensalzen als auch Lignosulfonat im Massenverhältnis von Eisensalz zu anionischem Polymer im Bereich von 1:0,5 bis 1:1,5, berechnet als wasserfreie Substanzen, zu dem septischen Abwasser gegeben wird.

3. Verfahren nach Anspruch 2, **dadurch gekennzeichnet, dass** die Mischung aus wässrigen Lösungen von Eisensalzen mit einer Konzentration von 20% bis 40% und aus wässrigen Lösungen von anionischem Polymer mit einer Konzentration von 10% bis 30% hergestellt wird.

4. Verfahren nach einem der vorhergehenden Ansprüche 1 bis 3, **dadurch gekennzeichnet, dass** die Eisensalzlösung und die Lösung von anionischem Polymer als Mischung beider Lösungen zugegeben werden können.

5. Verfahren nach einem der vorhergehenden Ansprüche 1 bis 4, **dadurch gekennzeichnet, dass** die Eisensalzlösung und die Lösung von anionischem Polymer gleichzeitig als separate Lösungen zugegeben werden können.

6. Verfahren nach einem der vorhergehenden Ansprüche 1 bis 5, **dadurch gekennzeichnet, dass** die Eisensalze aus der Gruppe bestehend aus FeCl₂ und FeCl₃ ausgewählt werden und das anionische Polymer aus der Gruppe bestehend aus Calciumlignosulfonat und Natriumlignosulfonat ausgewählt wird.

7. Verfahren nach einem der vorhergehenden Ansprüche 1 bis 5, **dadurch gekennzeichnet, dass** die Eisensalze aus der Gruppe bestehend aus FeClSO₄ und FeSO₄ ausgewählt werden und das anionische Polymer aus der Gruppe bestehend aus Natriumlignosulfonat ausgewählt wird.

## Revendications

1. Procédé de conditionnement d'eaux usées septiques destiné à prévenir la formation de sulfure d'hydrogène et à prévenir la précipitation subséquente de FeS,
**caractérisé en ce que** le procédé comprend l'étape consistant à ajouter simultanément aux eaux usées septiques une solution aqueuse de sels de fer, choisis dans le groupe constitué du FeCl₂, du FeCl₃, du FeClSO₄, du FeSO₄ et de leurs mélanges, qui réagissent avec un polymère anionique, choisi dans le groupe constitué du lignosulfonate de calcium et du lignosulfonate de sodium, qui interagit avec le FeS formé pour donner un sol colloïdal, résistant à la précipitation.

2. Procédé selon la revendication 1,
**caractérisé en ce qu'**un mélange aqueux de sels de fer et de lignosulfonate dans la proportion massique de sel de fer au polymère anionique dans la plage de 1/0,5 à 1/1,5 calculée sur la base des substances exemptes d'eau est ajouté aux eaux usées septiques.

3. Procédé selon la revendication 2,
**caractérisé en ce que** le mélange est préparé à partir de solutions aqueuses de sels de fer ayant une concentration de 20 % à 40 % et à partir de solutions aqueuses de polymère anionique ayant une concentration de 10 % à 30 %.

4. Procédé selon l'une quelconque des revendications précédentes 1 à 3,
**caractérisé en ce que** la solution de sels de fer et la solution de polymère anionique peuvent être ajoutées sous la forme d'un mélange des deux solutions.

5. Procédé selon l'une quelconque des revendications précédentes 1 à 4
**caractérisé en ce que** la solution de sels de fer et la solution de polymère anionique peuvent être ajoutées simultanément sous la forme de solutions distinctes.

6. Procédé selon l'une quelconque des revendications précédentes 1 à 5,
**caractérisé en ce que** les sels de fer sont choisis dans le groupe constitué du FeCl₂ et du FeCl₃, et le polymère anionique est choisi dans le groupe constitué du lignosulfonate de calcium et du lignosulfonate de sodium.

7. Procédé selon l'une quelconque des revendications précédentes 1 à 5,
**caractérisé en ce que** les sels de fer sont choisis dans le groupe constitué du FeClSO₄ et du FeSO₄, et le polymère anionique est choisi dans le groupe constitué du lignosulfonate de sodium.
